# EUROPEAN PATENT SPECIFICATION

(11) **EP 1 222 011 B1**
(45) Date of publication and mention of the grant of the patent: **31.03.2004**
(21) Application number: 99964110.3
(22) Date of filing: 06.12.1999
(51) Int. Cl.: B01D 29/15

(54) **FILTER ELEMENT ASSEMBLY**
FILTERELEMENTANORDNUNG
ENSEMBLE FILTRE

(43) Date of publication of application: 17.07.2002
(73) Proprietor: Gershenson, Moshe, Mohegan Lake, NY 10547 (US)
(72) Inventor: Gershenson, Moshe, Mohegan Lake, NY 10547 (US)
(74) Representative: Geyer, Werner, Dr.-Ing.
(86) International application number: PCT/US1999/028834
(87) International publication number: WO 2001/039858

(56) References cited:
- US-A- 4 496 459
- US-A- 4 769 052
- US-A- 5 910 247
- US-A- 6 030 531

## Description

This invention relates generally to the field of liquid filtration devices and more particularly to filter elements and filter element assemblies known as bag filters. In particular, this invention is directed to a filter element assembly, for use in a liquid filtration system comprising a filter insert having at least two concentrically arranged filter sleeves formed of flexible filter media for placement in a filter housing, the inner of said filter sleeves forming an interior cylindrical space, said filter sleeves forming an annular space therebetween and being connected to each other at one of their longitudinal ends by a rigid terminal plate having a closed surface, and said filter insert being collapsible when said filter insert is outside said filter housing.

Bag filter systems for liquid filtration are well known in the art and generally comprise a cylindrically shaped filter vessel typically closed at one end, with a removable or openable cap at the other end. Inlet and outlet conduits are connected to the vessel for delivering liquid to be filtered thereto and for removing filtered liquid therefrom. Replaceable filters are arranged within the cylindrical vessel in order to filter liquids entering the vessel. Typically bag filters consist of filter media having an open upper end and a closed bottom. The filter bag is usually supported within the vessel within an open mesh tubular basket or cage which is typically suspended within the housing. The basket is intended to support the media of the filter bag to prevent it from bursting as the bag fills with liquid. An example of such a well known filter bag arrangement is shown in the United States Patent Numbers 4,285,814 and 4,669,167.

Filter bag arrangements have numerous advantages with respect to other filter devices such as cartridges. One such advantage is that the liquid to be filtered enters the filter bag at its open end so that the liquid can pass through the porous side-walls of the bag and filtered liquid can exit the filter vessel from the space between the outer bag surface and the inner wall of the vessel. In this manner dirt or contaminants can be contained within the bag and easily removed upon opening the vessel, allowing replacement with a clean filter bag. However, this typical arrangement presents a number of severe limitations which inhibits the use of bag filters for certain applications. These limitations relate to the fact that bag filter vessels are typically larger than cartridge housings, but the bag filter elements provide only a limited active filtration surface area and limited life. Bag filters also have a large volume of liquid within the enclosed volume of the bag. If the contours and shape of the bottom of the bag filter does not exactly coincide with the contours and shape of the retaining basket, filter bags will have a tendency to burst as a result of the large volume of liquid which it contains. As a result, most bag filter media can not be manufactured from high efficiency filtration media which is usually more delicate than the more coarse filter media typically used in liquid filter bags. The typical filter bag is also difficult to insert and remove from the vessel as it has no rigid structure other than possibly a retaining ring at the open top end. Filter bags rarely provide a reliable bypass seal even when constructed with elastomeric sealing members at the open top end.

Because filter bags have a large holding volume for liquid, removal of a used bag is quite difficult since the bag is typically filled with liquid, which makes the bag heavy and may contain hazardous substances. In order to alleviate this situation, evacuation balloons are frequently used inside the bags to reduce the liquid holding capacity. Handling of such balloons, however, is cumbersome and usually does not overcome this problem. A well known conventional filter bag designated as a "#2" has a liquid holding capacity of 4.3 gallons. Depending upon the specific gravity of the liquid within the bag, a full bag could weigh thirty pounds or more. This is difficult to remove from the filter vessel and since the removal of such a bag from the vessel typically involves contact with a side wall of the vessel, breakage of the bag during removal is not uncommon. This invariably results in contamination of the area around the vessel.

When the typical bag is inserted into a cylindrical or conical basket, the bottom of the bag is required to conform to the shape of the basket in three dimensions even though the bag may be manufactured from flat media, i.e., two dimensional. As a result, the filter bags rarely, if ever, fit correctly into the bottom of the basket. To overcome this problem, manufacturers have usually produced oversized bags, longer than the basket, in order to permit forcing of the bottom surface of the bag into the entire contour of the basket. As a result, much of the filter media tends to fold over onto itself and render much of the filter surface unusable. If the filter media is not fully seated in the basket it usually results in the bag bursting along the bottom of the bag as a result of the liquid pressure on the bottom surface.

There have been numerous attempts to design variations of the bag filter in order to minimize the liquid holding capacity while increasing the filtration surface area. One such design is shown in Smith patent No. 4,081,379. In the Smith patent a filter bag design has two rings of different diameters. The outer ring is affixed to the top of the body of the vessel, while the inner ring is seated within the outer ring and generally located on a plane below the outer ring in order to form an annularly shaped filter bag that is continuous from the outer to the inner ring. The particular shape of the annular filter bag provides more available surface than the conventional filter bag but it is difficult to produce as it requires manufacture of a complex shape and it does not provide for positive support of the filtration media within a basket. The Smith design typically involves a sleeve made from a single piece of material which is turned inward to form the inner filter. This results in relatively sharp comers which are difficult to insert into the basket. The Smith bag is not positively supported in a retaining basket and is thus also prone to bursting. It is not uncommon to require the use of a special tool in order to insert this type of bag into a vessel.

Other variations of this design are shown in U.S. patent 4,749,485 which proposes a triangularly shaped filter, and U.S. patent 5,484,529 which discloses a cylindrically shaped filter bag which includes a retaining bottom end cap. This is intended to overcome the problem of fitting a filter bag into a basket but does not result in any increased filtration filter area.

U. S. Patent 4,496,459 discloses a filter element assembly for use in a liquid filtration system according to the preamble of claim 1. In the embodiment of Fig. 3 of this document, the filter element assembly includes an outer plastic ring which is secured to the outer filter sleeve and an inner plastic ring which is secured to the inner filter sleeve. Both rings are separate indivual elements and are not connected to each other. In this known filter element assembly there is no structure supporting the end of the filter bag segments and to ensure that the filter bag segments will remain in an operative position. There is also no structure for supporting those segments, which would allow easy insertion and removal from the filtering housing. The filter element assembly with the filter insert in form of a bag as described by this document, can only be used with a filter housing which is uniquely designed to accommodate this filter insert (bag). Such housing must have a unique structure to support both rings. Further, the filter insert (bag) according to this document requires a particular annular support abutment surface as well as a housing with a push rod in form of a tubular member. Therefore, this known filter element assembly cannot be used in a conventional housing that currently exists in the field. In addition, this known filter element assembly lacks also any structure for directing the flow of fluid into the annular space between the sleeves. The mere spacing of both rings does not achieve this objective and allows flow into the interior cylindrical space.

It is accordingly a general object of the invention to provide a filter bag and filter bag assembly intended to overcome the disadvantages of the prior art.

A further object of the invention is to provide a liquid filter assembly for use in bag filter systems permitting inline, inlet and outlet conduits, such as commonly used in cartridge systems.

Yet another object of the invention is to provide a filter assembly which achieves increased dirt holding capacity and increased filtration surface area while minimizing liquid capacity.

A still further object of this invention is to provide a liquid filtration element usable in bag filter type vessels which will permit the use of a second stage filter element within the same housing.

The above objects, features and advantages, along with other objects, features and advantages will become more apparent from the detailed description of the invention in conjunction with the accompanying drawings to be described more fully hereinafter.

The present invention is directed to an improved liquid filter element assembly for use in a liquid filtration system.

The filter element assembly of the present invention includes at least two concentrically arranged cylindrical filter sleeves formed of flexible filter media for placement in a filter housing, the inner of said filter sleeves forming an interior cylindrical space, said sleeves forming an annular space therebetween and being connected to each other at their longitudinal ends by an annular terminal plate having a closed surface, and said filter insert being collapsible when being outside the filter housing. The filter sleeves are connected at their opposite longitudinal ends by a rigid inlet plate having openings provided therein for permitting liquid to be filtered to flow therethrough into said annular space between the two filter sleeves. The inlet plate is adapted to direct the liquid to be filtered to flow into said annular space.

Contaminated fluid enters the filter bag assembly through the holes in the inlet plate. Contaminated material will thus remain within the space formed between the concentric cylinders and between the inlet and terminal plates. Liquid to be filtered will pass through the porous cylinder walls. The inventive assembly can be supported within a basket having perforated cylindrical walls or wire mesh walls thus preventing the cylindrical filter walls from bursting, while allowing the liquid to pass through the basket. The filter bag assembly and the basket can thus be placed within a typical cylindrical filter vessel having inlet and outlet conduits as well as means for sealing the filter bag element assembly within the vessel to prevent any bypass of unfiltered liquid around the filter assembly.

Advantageous embodiments of the invention are set forth in the subclaims.

The foregoing and other features of the present invention are more fully described with reference to the following drawings annexed hereto.
Figure 1 is a side and partial cutaway sectional view of a filter bag assembly according to one embodiment of the present invention;
Figure 2 is a perspective view, partially cut away and shown in section, of the inlet plate shown in Figure 1;
Figure 3 is a perspective view, partially cut away and shown in section, of the terminal plate shown in Figure 1;
Figure 4 is a side view, partially cut away and shown in section of yet another embodiment of the present invention;
Figure 5 is a sectional view depicting a sealing mechanism used in the present invention;
Figure 6 is a sectional view of a filter vessel configuration having bottom inline inlet and outlet conduits which is permitted by the present invention; and
Figures 7a, 7b and 7c are side views of bag type filter vessels having different inlet and outlet configurations made possible by the present invention;

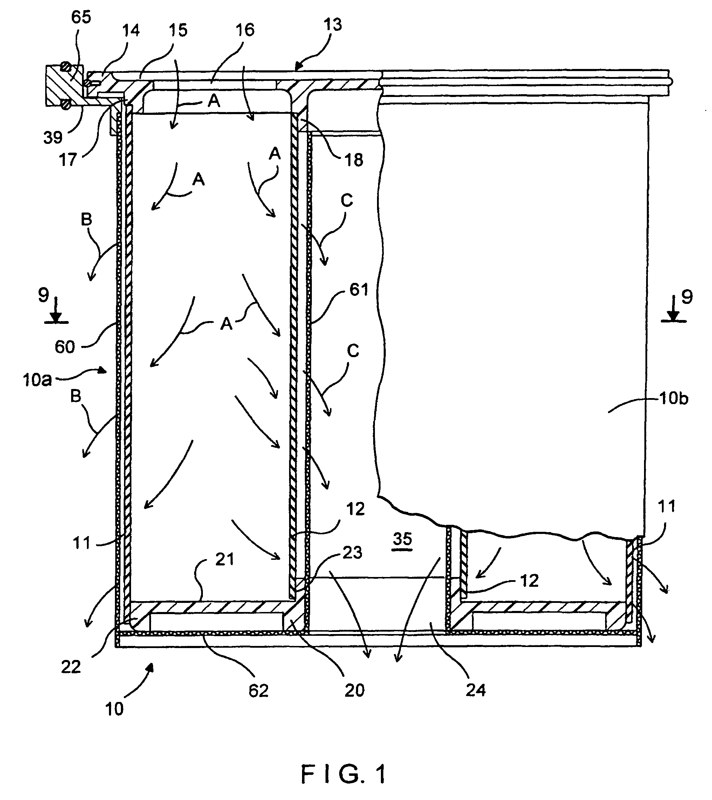

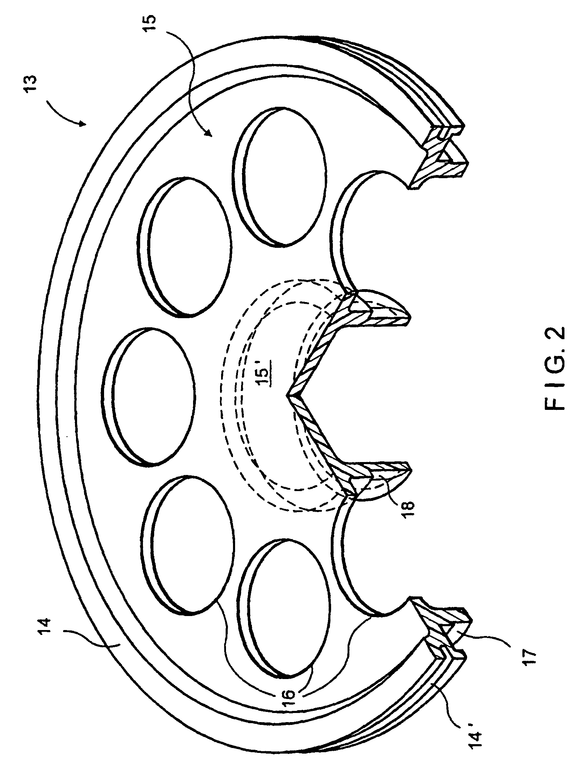

With reference to Figure 1, a preferred embodiment of the filter assembly of the present invention is illustrated. Filter 10 of this embodiment includes an annularly shaped support basket 10a and insert or element 10b arrange to be carried by the support basket, insert 10b has a cylindrical outer sleeve 11 and a cylindrical inner sleeve 12 disposed concentrically within the outer sleeve 11. Outer and inner sleeves 11 and 12 can be made of a variety of porous filter media materials through which liquid to be filtered can pass for filtering out contaminants. Such materials include nylon, polypropylene, needle punched felt and other such similar filter media. The sleeves 11 and 12 are connected at one end to an inlet plate 13 and at the other end to a terminal plate 20. Inlet plate 13 is shown in greater detail in Figure 2 and includes an annular sealing ring 14 which is integrally formed with a fluid receiving planar surface 15. Surface 15 has a series of holes or openings 16 which are arranged so that liquid to be filtered will pass through the holes 16 into the annular space between concentrically arranged sleeves 11 and 12, as indicated by arrows "A". Surface 15 also has an area 15' which has no holes and is positioned to prevent flow of liquid into the space interiorly of sleeve 12. Cylindrically shaped flange 18 depends from the surface 15 in order to provide a surface for attachment of inner sleeve 12. An annularly shaped flange 17 depends from ring 14 to provide a surface for attachment of outer sleeve 11. Accordingly, outer sleeve 11 and inner sleeve 12 are connected to the inlet plate 13 at depending annular flanges 17 and 18 respectively. Attachment can be accomplished through a variety of means, the most efficient of which will be ultrasonic welding.

The inlet plate can be made of a unitary construction such as by injection molding of polymeric material such as polypropylene. Outer and inner sleeves 11 and 12 can similarly be made from polymeric material such as polypropylene thus permitting easy connection at areas 17 and 18 by ultrasonic welding. Other appropriate means of connecting the outer and inner sleeves to the inlet plate, such as through the use of appropriate adhesives can also be used.

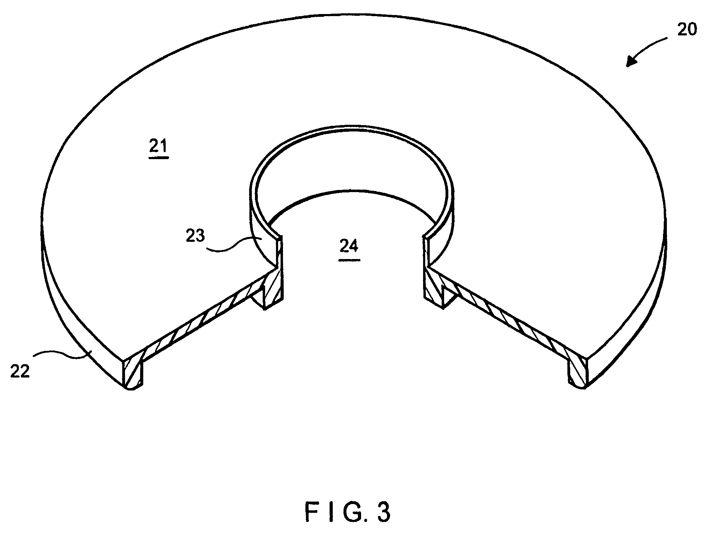

Terminal plate 20, shown in greater detail in Figure 3, is also preferably formed through a process of injection molding from polymeric material such as polypropylene and includes a closed surface 21 to be located at the bottom of the annular space between sleeves 11 and 12. A depending annular wall or flange 22 is located at the outer peripheral end of surface 21 to provide a surface area for connecting the bottom of sleeve 11 to the terminal plate. An upwardly extending cylindrical wall or flange 23 is arranged to provide a surface for connecting the bottom of sleeve 12 to terminal plate 20. Accordingly, outer and inner sleeves 11 and 12 are connected to the terminal plate 20 at areas 22 and 23 respectively. An opening 24 is located at the center of terminal plate 20.

With the bottom of the annular space between outer and inner sleeves 11 and 12 closed by the surface 21, liquid to be filtered entering the annular space between sleeves 11 and 12 through openings 16 in the inlet plate 13, as indicated by arrows marked by reference letter "A", will be forced to pass through the porous filter media of sleeve 11 (arrows "B") or through the inner sleeve 12 (arrows "C"), thus passing to the area outside of the assembly 10 or through the opening 24 in terminal plate 20 at the bottom of the interior of cylindrical sleeve 12.

In order to support the sleeves against the pressure of the fluid flow, the element 10b is supported by basket 10a which includes outer rigid mesh cylindrical screen 60, inner rigid mesh cylindrical screen 61 and a circular rigid mesh bottom screen 62. Outer cylindrical screen 60 is positioned downstream and concentrically exteriorly of and adjacent to sleeve 11, while inner cylindrical screen 61 is positioned downstream and concentrically interiorly of and adjacent to sleeve 12.

When the assembly is placed within a filter vessel, liquid to be filtered will enter the vessel through an inlet, passing via an inlet conduit through an openable top cover of the vessel and onto the plate 15 of the filter element 10b. The liquid then passes through openings 16 into the annular space between sleeves 11 and 12. The liquid will then pass through the media of the sleeve 11 and through the mesh of screen 60 into the peripheral space between the inner wall of the vessel and sleeve 11, surrounding the filter assembly 10, or through the sleeve 12 and mesh of screen 61 and into the interior cylindrical space 35 formed by sleeve 12. In the embodiment shown in Figure 1, the filtered liquid will then pass to the bottom of the vessel through an outlet. In one embodiment not shown in the figures this outlet is only accessible through a second stage cartridge filter which may be positioned interiorly of the cylindrical space 35 formed by sleeve 12 so that filtered liquid entering the peripheral space or interior cylindrical space 35 will thence be forced to pass through this cartridge filter before being permitted to exit the outlet.

The mesh or perforated basket 10a is positioned within the vessel in order to support the filter media of sleeve 11. The bottom of the basket can be made of similarly perforated material or a closed plate. The filter assembly 10 can be supported within the vessel by allowing the annular ring 14 of the inlet plate to rest on a support shoulder 39 of the basket 10a which in turn is supported in the vessel on a support shoulder. Sealing O-rings can be positioned to provide an appropriate seal between the cover and the support of the vessel.

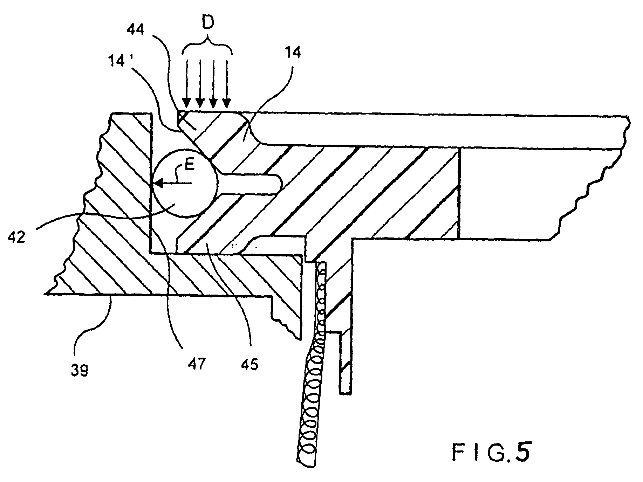

Annular ring 14 of the inlet plate 13 supports a circumferential groove 14'. Groove 14' is shown in greater detail in Figure 5. Groove 14' is generally V-shaped and arranged to accommodate a sealing O-ring 42. Ring 14 is thus bifurcated into an upper fork 44 and a lower fork 45. Upper fork 44 is engaged by the closure lid of the vessel when the filter assembly 10 is housed in place in the vessel. Thus the pressure caused by this lid (schematically indicated by arrows "D") causes ring 42 to exert outward pressure against inner wall 47 of the basket support 39 (indicated by arrow "E") thus causing a more positive seal with the inner wall 47 of the basket support 39.

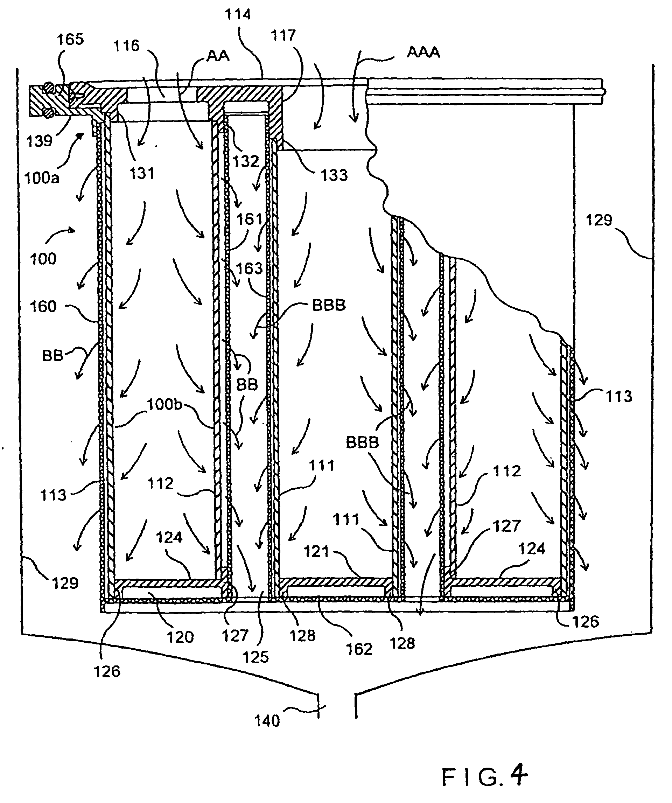

Figure 4 illustrates yet another embodiment of the present invention consisting of a filter assembly 100 which includes filter insert 100b supported by basket 100a. Filter insert 100b has three concentrically arranged flexible filter media sleeves 111, 112 and 113. In this arrangement, filter insert 100b also has an inlet plate 114, a first terminal plate 120 and a second terminal plate 121. Inlet plate 114 has a plurality of openings or holes 116 to allow incoming fluid (represented by arrows "AA") to enter the annular space between filter media sleeves 112 and 113 and through the screens of support basket 100a. Inlet plate 114 also has a central opening 117 which allows incoming liquid (represented by arrows "AAA") to enter the cylindrical space interiorly of sleeve 111. Hence, liquid which enters the annular space between sleeves 112 and 113 will be filtered by passing through the media of sleeves 112 and 113. The liquid being filtered by passing through sleeve 112 (represented by arrows "BB") will, after being filtered, pass into the annular space formed between sleeves 111 and 112. Liquid which passes through filter sleeve 113 will enter the annular space formed between basket 100a and the inner wall of the vessel (schematically shown and indicated as reference numeral 129 in Figure 4). Liquid "AAA" which enters the cylindrical space within sleeve 111 and the screens of basket 100a will be filtered by passing through the filter media of sleeve 111 (represented by arrows "BBB"), thus entering the annular space formed between sleeves 111 and 112.

First terminal plate 120 has a closed annular portion 124 and a central opening 125 which forms an outlet opening for filtered liquid "BB" and "BBB" from within the annular space between sleeves 111 and 112. The closed annular portion 124 prevents liquid from exiting the annular space between sleeves 113 and 112, thus causing the liquid in this space to pass through the filtration media of sleeves 113 and 112. Second terminal plate 121 similarly prevents liquid from exiting the central interior space within sleeve 111, thus causing such liquid in this space to pass through the filtration media of sleeve 111. Filtered liquid "BB" which entered the annular space between annular sleeve 113 and inner wall 129 of the vessel will pass to the area at the bottom of the vessel along with the filtered liquid exiting the open center 125 of first terminal plate 120 in order to exit the vessel through outlet 140.

First terminal plate 120 is formed with flanges 126 and 127 which form surfaces to which sleeves 113 and 112 respectively, can be connected by ultrasonic welding or other attachment means. Second terminal plate 121 has a flange 128 which forms a surface to which sleeve 111 can be connected by similar means.

Inlet plate 114 also has depending annular flanges 131, 132 and 133 which form surfaces to which the tops of sleeves 113, 112 and 111 respectively can be connected, such as by ultrasonic welding or other attachment means.

The embodiment of Figure 4 accordingly provides a filter element having a cumulative surface area formed by the cylindrical surface areas of sleeves 111, 112 and 113.

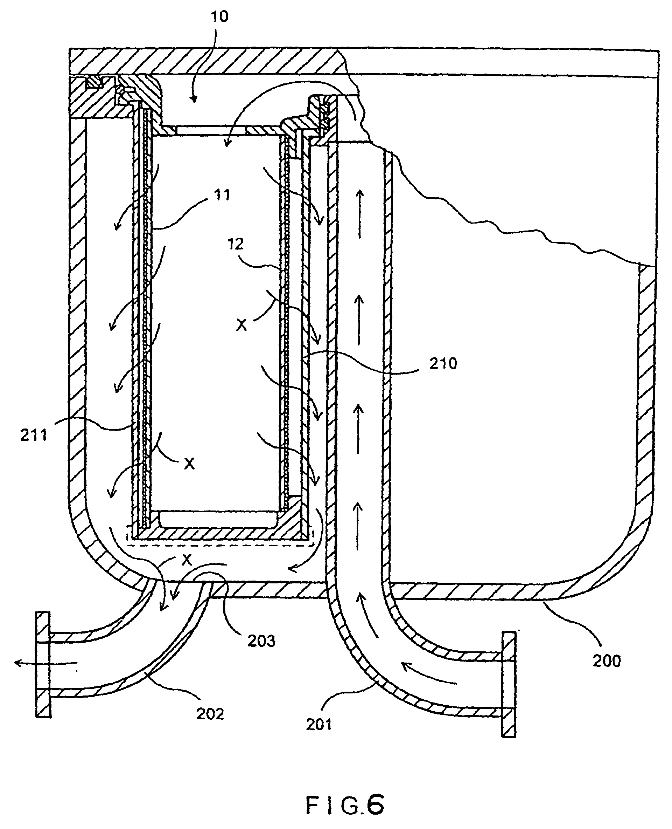

Figure 6 illustrates a configuration of a filter vessel which permits the use of inline, inlet and outlet conduits positioned at the bottom of the filter vessel. In this arrangement inlet conduit 201 enters through the bottom of the vessel and extends upwardly through the center of the vessel. Outlet conduit 202 is connected to an opening 203 offset from the center of the vessel but located at its bottom to provide means for egress of filtered liquid, such as represented by arrows "X". In this arrangement, concentrically arranged perforated cylinders 210 and 211 form a support basket which surround the inlet conduit 201 to support the filter assembly 10. The filter assembly 10, such as described in connection with Figures 1, 2 and 3, is disposed within the vessel so that sleeves 11 and 12 are located within the annular space between basket walls 210 and 211.

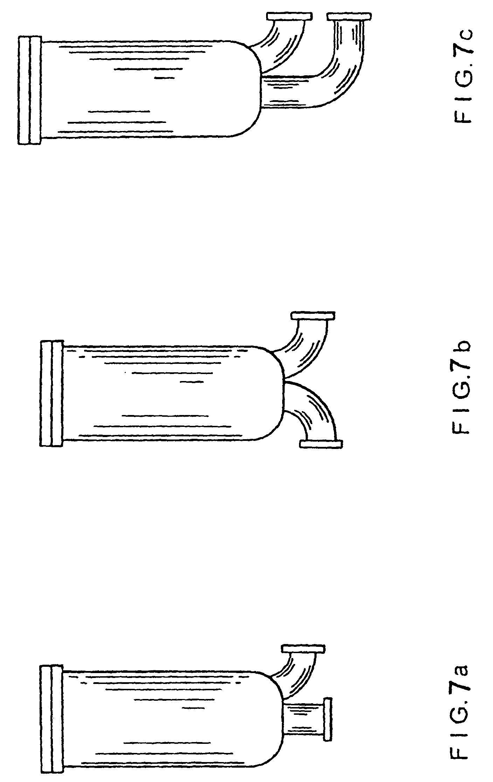

Other inlet and outlet conduit arrangements, such as shown in Figures 7a, 7b and 7c are thereby made possible through the use of the filter assembly of the present invention.

This invention has been described and illustrated in connection with certain preferred embodiments which are illustrative of the principals of the invention.

## Claims

1. A filter element assembly (10) for use in a liquid filtration system comprising a filter insert (10b) having
- two concentrically arranged cylindrical filter sleeves (11, 12) formed of flexible filter media for placement in a filter housing, the inner (12) of said filter sleeves forming an interior cylindrical space (35),
- said filter sleeves (11, 12) forming an annular space therebetween and being connected to each other at one of their longitudinal ends by a rigid annular terminal plate (20) having a closed surface,
- and said filter insert (10b) being collapsible when said filter insert (10b) is outside said filter housing,
**characterized in that**
- said filter sleeves (11, 12) are connected at their opposite longitudinal ends by a rigid inlet plate (13) having openings (16) provided therein for permitting liquid to be filtered to flow therethrough into said annular space between the two filter sleeves (11, 12),
- said inlet plate (13) being adapted to direct the liquid to be filtered to flow into said annular space.

2. A filter element assembly according to claim 1, **characterized in that** it further comprises an annular shaped support basket (10a) for placement within said filter housing, said support basket (10a) having two concentrically arranged cylindrical screens (60, 61) forming an annular receiving space therebetween for receiving said filter insert (10b) therein, and being connected to each other by a connecting element (62), especially a flat annular screen, at one longitudinal end thereof, said filter insert (10b) being removably arranged within said receiving space and each of both filter sleeves (11, 12) being positioned adjacent one of the cylindrical screens (60, 61)

3. A filter element assembly according to claim 1 or 2, **characterized in that** said inlet plate (13) is provided with an additional central opening which is adapted, when the filter element assembly is placed within said filter housing, to sealingly receive an element allowing passage of liquid to be filtered from an inlet conduit (201) axially extending through the center of said interior cylindrical space (35), but without fluid communication between said additional opening and said interior cylindrical space (35).

4. A filter element assembly (100) according to claim 1 or claim 2, **characterized in that** there is provided a third cylindrical filter sleeve (111) which is formed of flexible filter media and is arranged concentrically within said interior cylindrical space (35) of said inner (12) of both other filter sleeves (11, 12), forming an annular space therebetween, and defining a central interior space for receiving liquid to be filtered, one longitudinal end of said third filter sleeve (111) being connected to a second rigid terminal plate (121) preventing liquid from exiting the central interior space within the third filter sleeve (111) therethrough, and its other longitudinal end being connected to said rigid inlet plate (114) which is provided with a central opening (117) to permit liquid to be filtered to also flow therethrough into the central interior space within the third filter sleeve (111).

5. A filter element assembly according to claim 1 or claim 2, **characterized in that** said inlet plate (13) has an area (15') preventing the flow of liquid to be filtered into said interior cylindrical space (35).

6. A filter element assembly according to any of claims 1, 2, 4 and 5, **characterized in that** said inlet plate (13; 114) has a planar surface (15) for receiving liquid to be filtered, said openings (16) being arranged through said planar surface (15).

7. A filter element assembly according to any of claims 1, 2, 5 and 6, **characterized by** said terminal plate having a closed planar surface (21), an outer flange (22) depending from said planar surface (21) and an inner flange (23) extending from said planar surface (21) in a direction opposite to that of the outer flange (22).

8. A filter element assembly according to any of claims 1 to 7, **characterized by** said filter sleeves (11, 12; 111, 112, 113) being ultra-sonically welded to said inlet plate (12) and/or to said inner and outer flanges (22, 23) and/or to said terminal plate (21; 120, 121).

9. A filter element assembly according to any of claims 1 to 8, **characterized in that** said inlet plate (13) has an annular ring (14) formed integrally with said inlet plate (13).

10. A filter element assembly according to claim 9, **characterized by** said ring (14) comprising a V-shaped groove (14') the open end of which faces a direction perpendicular to the longitudinal axis of said filter element (10), and further being **characterized by** an O-ring (42) carried within said groove (14') for engaging a side wall surface (47) of said basket (10a) when said filter element (10) is supported within the housing.

11. A filter element assembly according to claim 10, **characterized by** said V-shaped groove (14') comprising upper and lower forks (44, 45), both forks (44) being designed such that, when said filter element (10) is carried within the housing, under action of a compressing force the O-ring (42) between them being compressed and, thereby, caused to exert a force against said side wall surface (47) of said basket (10a) to effect a fluid seal.

12. A filter element assembly according to any of claims 1 to 11, **characterized by** said inlet plate (13) having inner (18) and outer (19) flanges to each of which one of said filter sleeves (11, 12) is connected, resp.

13. A filter element assembly according to claims 6 and 12, **characterized by** said inner flange (18) depending from said planar surface (15) and said outer flange (17) depending from said ring (14).

14. A filter element assembly according to claim 13, **characterized by** said planar surface (15) of said inlet plate (13) being closed to communication with said interior cylindrical space (35).

15. A filter element assembly according to any of claims 1 to 14, **characterized by** said inlet plate (13) being of unitary construction.

16. A filter element assembly according to any of claims 1 to 15, **characterized in that** said inlet plate (13), terminal plate (20) and filter sleeves (11, 12) are made from polymeric material, in particular of polypropylene.

17. A filter element assembly according to any of claims 1 to 16, **characterized in that** there are provided supporting means (14, 65) for supporting said filter insert (10b) within said housing.

18. A filter element assembly according to claim 2 or claim 2 in connection with any of claims 5 to 17, **characterized in that** it further comprises a cartridge located interiorly of the inner (61) of said cylindrical screens (61, 62) of said basket (10a).

19. A filter element assembly according to any of claims 9 to 18, **characterized in that** a shoulder (65) is formed on said basket (10a) for supporting said ring (14), said shoulder (65) being arranged to be supported by said housing.

20. A filter element assembly according to any of claims 2 to 19, **characterized in that** said cylindrical screens (60, 61, 62; 160, 161, 162, 163) are perforated or mesh screens.

21. Use of a filter element assembly according to any of claims 1 to 20 in a bag type liquid filtration system.

## Patentansprüche

1. Filterelementanordnung (10) zur Verwendung in einem Flüssigkeitsfiltrationssystem, mit einem Filtereinsatz (10b), der folgendes aufweist:
- zwei konzentrisch angeordnete, zylinderförmige Filterhülsen (11, 12), die aus biegsamen Filtermedien gebildet sind, zur Anordnung in einem Filtergehäuse, wobei die innere (12) der Filterhülsen einen zylinderförmigen Innenraum (35) bildet,
- wobei die Filterhülsen (11, 12) einen ringförmigen Raum zwischen sich bilden und an einem ihrer Längsenden über eine steife, ringförmige Endplatte (20) mit einer geschlossenen Oberfläche miteinander verbunden sind,
- und wobei der Filtereinsatz (10b) zusammenfaltbar ist, wenn sich der Filtereinsatz (10b) außerhalb des Filtergehäuses befindet,
**dadurch gekennzeichnet, daß**
- die Filterhülsen (11, 12) an ihren gegenüberliegenden Längsenden über eine steife Einlaßplatte (13), in der Öffnungen (16) ausgebildet sind, um zu filtrierende Flüssigkeit durch diese hindurch zum ringförmigen Raum zwischen den beiden Filterhülsen (11, 12) strömen zu lassen, miteinander verbunden sind,
- wobei die Einlaßplatte (13) dazu eingerichtet ist, die zu filtrierende Flüssigkeit so zu lenken, daß sie in den ringförmigen Raum fließt.

2. Filterelementanordnung nach Anspruch 1, **dadurch gekennzeichnet, daß** sie ferner einen ringförmig ausgebildeten Tragekorb (10a) zur Anordnung in dem Filtergehäuse umfaßt, wobei der Tragekorb (10a) zwei konzentrisch angeordnete, zylinderförmige Siebe (60, 61) aufweist, die zwischen sich einen ringförmigen Aufnahmeraum zur Aufnahme des Filtereinsatzes (10b) darin ausbilden und über ein Verbindungselement (62), insbesondere ein flaches, ringförmiges Sieb, an einem ihrer Längsenden miteinander verbunden sind, wobei der Filtereinsatz (10b) herausnehmbar in dem Aufnahmeraum angebracht ist und jede der beiden Filterhülsen (11, 12) benachbart einem der zylinderförmigen Siebe (60, 61) angeordnet sind.

3. Filterelementanordnung nach Anspruch 1 oder 2, **dadurch gekennzeichnet, daß** die Einlaßplatte (13) mit einer zusätzlichen, mittleren Öffnung versehen ist, die dazu eingerichtet ist, dann, wenn die Filterelementanordnung in dem Filtergehäuse angeordnet ist, ein Element in dichtender Weise aufzunehmen, das ein Hindurchströmen von zu filternder Flüssigkeit von einem Einlaßkanal (201) aus gestattet, der axial durch die Mitte des zylinderförmigen Innenraumes (35) verläuft, ohne daß aber eine Fluidverbindung zwischen der zusätzlichen Öffnung und dem zylinderförmigen Innenraum (35) besteht.

4. Filterelementanordnung (100) nach Anspruch 1 oder Anspruch 2, **dadurch gekennzeichnet, daß** eine dritte zylinderförmige Filterhülse (111) vorgesehen ist, die aus biegsamen Filtermedien gebildet und konzentrisch in dem zylinderförmigen Innenraum (35) der inneren (12) der beiden anderen Filterhülsen (11, 12) unter Ausbildung eines ringförmigen Raumes zwischen ihr und dieser angeordnet ist und einen mittleren Innenraum zur Aufnahme von zu filternder Flüssigkeit festlegt, wobei ein Längsende der dritten Filterhülse (111) mit einer zweiten steifen Endplatte (121) verbunden ist, die ein Austreten von Flüssigkeit aus dem mittleren Innenraum in der dritten Filterhülse (111) durch diese verhindert, und deren anderes Längsende mit der steifen Einlaßplatte (114) verbunden ist, die mit einer mittleren Öffnung (117) versehen ist, um auch einen Durchfluß von zu filternder Flüssigkeit durch diese in den mittleren Innenraum innerhalb der dritten Filterhülse (111) zuzulassen.

5. Filterelementanordnung nach Anspruch 1 oder Anspruch 2, **dadurch gekennzeichnet, daß** die Einlaßplatte (13) einen Bereich (15') aufweist, der den Durchfluß von zu filternder Flüssigkeit in den zylinderförmigen Innenraum (35) verhindert.

6. Filterelementanordnung nach einem der Ansprüche 1, 2, 4 und 5, **dadurch gekennzeichnet, daß** die Einlaßplatte (13; 114) eine ebene Oberfläche (15) zur Aufnahme von zu filternder Flüssigkeit aufweist, wobei die Öffnungen (16) durch diese ebene Oberfläche (15) hindurch vorgesehen sind.

7. Filterelementanordnung nach einem der Ansprüche 1, 2, 5 und 6, **dadurch gekennzeichnet, daß** die Endplatte eine geschlossene, ebene Oberfläche (21), einen von der ebenen Oberfläche (21) herabhängenden äußeren Flansch (22) und einen inneren Flansch (23) aufweist, der sich von der ebenen Oberfläche (21) aus in einer zur Richtung des äußeren Flansches (22) entgegengesetzten Richtung erstreckt.

8. Filterelementanordnung nach einem der Ansprüche 1 bis 7, **dadurch gekennzeichnet, daß** die Filterhülsen (11, 12; 111, 112, 113) mit der Einlaßplatte (12) und/oder mit dem inneren bzw. dem äußeren Flansch (22, 23) und/oder mit der Endplatte (21; 120, 121) ultraschallverschweißt sind.

9. Filterelementanordnung nach einem der Ansprüche 1 bis 8, **dadurch gekennzeichnet, daß** die Einlaßplatte (13) einen Kreisring (14) aufweist, der einstückig mit der Einlaßplatte (13) ausgebildet ist.

10. Filterelementanordnung nach Anspruch 9, **dadurch gekennzeichnet, daß** der Ring (14) eine V-förmige Nut (14') umfaßt, deren offenes Ende in eine Richtung senkrecht zur Längsachse des Filterelementes (10) weist, und zudem **gekennzeichnet durch** einen in der Nut (14') sitzenden O-Ring (42), der, wenn das Filterelement (10) in dem Gehäuse sitzt, in Eingriff mit einer Seitenwandfläche (47) des Korbes (10a) tritt.

11. Filterelementanordnung nach Anspruch 10, **dadurch gekennzeichnet, daß** die V-förmige Nut (14') eine obere und eine untere Gabel (44, 45) aufweist, wobei beide Gabeln (44) so gestaltet sind, daß, wenn das Filterelement (10) in dem Gehäuse sitzt, der O-Ring (42) zwischen ihnen durch die Wirkung einer Druckfeder zusammengedrückt wird und dadurch das Ausüben einer Kraft gegen die Seitenwandfläche (47) des Korbes (10a) zur Ausbildung einer Fluiddichtung bewirkt.

12. Filterelementanordnung nach einem der Ansprüche 1 bis 11, **dadurch gekennzeichnet, daß** die Einlaßplatte (13) einen inneren (18) und einen äußeren (19) Flansch aufweist, mit denen jeweils eine der Filterhülsen (11, 12) verbunden ist.

13. Filterelementanordnung nach den Ansprüchen 6 und 12, **dadurch gekennzeichnet, daß** der innere Flansch (18) von der ebenen Oberfläche (15) und der äußere Flansch (17) vom Ring (14) herabhängt.

14. Filterelementanordnung nach Anspruch 13, **dadurch gekennzeichnet, daß** die ebene Oberfläche (15) der Einlaßplatte (13) gegen eine Verbindung mit dem zylinderförmigen Innenraum (35) verschlossen ist.

15. Filterelementanordnung nach einem der Ansprüche 1 bis 14, **dadurch gekennzeichnet, daß** die Einlaßplatte (13) einstückig ausgebildet ist.

16. Filterelementanordnung nach einem der Ansprüche 1 bis 15, **dadurch gekennzeichnet, daß** die Einlaßplatte (13), die Endplatte (20) und die Filterhülsen (11, 12) aus einem Polymerwerkstoff, insbesondere aus Polypropylen, gefertigt sind.

17. Filterelementanordnung nach einem der Ansprüche 1 bis 16, **dadurch gekennzeichnet, daß** Tragemittel (14, 65) zum Tragen des Filtereinsatzes (10b) in dem Gehäuse vorgesehen sind.

18. Filterelementanordnung nach Anspruch 2 oder nach Anspruch 2 in Verbindung mit einem der Ansprüche 5 bis 17, **dadurch gekennzeichnet, daß** sie zudem eine Kartusche umfaßt, die innerhalb des inneren (61) der zylinderförmigen Siebe (61, 62) des Korbes (10a) angeordnet ist.

19. Filterelementanordnung nach einem der Ansprüche 9 bis 18, **dadurch gekennzeichnet, daß** eine Schulter (65) auf dem Korb (10a) zum Tragen des Rings (14) ausgebildet ist, wobei die Schulter (65) so angeordnet ist, daß sie vom Gehäuse getragen wird.

20. Filterelementanordnung nach einem der Ansprüche 2 bis 19, **dadurch gekennzeichnet, daß** die zylindrischen Siebe (60, 61, 62; 160, 161, 162, 163) Loch- oder Maschensiebe sind.

21. Verwendung einer Filterelementanordnung nach einem der Ansprüche 1 bis 20 in einem beutelartigen Flüssigkeitsfiltrationssystem.

## Revendications

1. Ensemble filtre (10) pour utilisation dans un système de filtrage de liquide, comprenant un insert de filtre (10b) ayant
- deux manchons filtrants cylindriques (11, 12) agencés de façon concentrique, formés dans un matériau de filtrage flexible, à placer dans un logement de filtre, le plus intérieur (12) desdits manchons filtrants formant un espace cylindrique intérieur (35),
- lesdits manchons filtrants (11, 12) formant un espace annulaire entre eux et étant connectés l'un à l'autre à l'une de leurs extrémités longitudinales par une plaque terminale annulaire rigide (20) ayant une surface fermée,
- et ledit insert de filtre (10b) pouvant être écrasé lorsque ledit insert de filtre (10b) est hors du logement de filtre,
**caractérisé en ce que**
- lesdits manchons filtrants (11, 12) sont connectés à leurs extrémités longitudinales opposées par une plaque d'entrée rigide (13) ayant des ouvertures (16) disposées dans celle-ci pour permettre au liquide à filtrer de s'écouler à travers celle-ci vers ledit espace annulaire entre les deux manchons filtrants (11, 12),
- ladite plaque d'entrée (13) étant apte à diriger le liquide à filtrer pour que celui-ci s'écoule vers ledit espace annulaire.

2. Ensemble filtre selon la revendication 1, **caractérisé en ce qu'**il comprend en outre un panier de support de forme annulaire (10a) à placer à l'intérieur dudit logement de filtre, ledit panier de support (10a) ayant deux tamis cylindriques (60, 61) agencés de façon concentrique, formant un espace de réception annulaire entre eux pour y recevoir ledit insert de filtre (10a), et étant connectés l'un à l'autre par un élément de connexion (62), en particulier un tamis annulaire plat, à l'une de ses extrémités longitudinales, ledit insert de filtre (10b) étant agencé de façon amovible à l'intérieur dudit espace de réception et chacun des deux manchons filtrants (11, 12) étant positionné adjacent à l'un des tamis cylindriques (60, 61).

3. Ensemble filtre selon la revendication 1 ou 2, **caractérisé en ce que** ladite plaque d'entrée (13) est proposée avec une ouverture centrale supplémentaire qui est apte, lorsque l'ensemble filtre est placé à l'intérieur dudit logement de filtre, à recevoir en assurant une étanchéité un élément permettant le passage du liquide à filtrer depuis un conduit d'entrée (201) s'étendant axialement à travers le centre dudit espace cylindrique intérieur (35), mais sans communication de fluide entre ladite ouverture supplémentaire et ledit espace cylindrique intérieur (35).

4. Ensemble filtre (100) selon la revendication 1 ou la revendication 2, **caractérisé en ce qu'**un troisième manchon filtrant cylindrique (111) est fourni, lequel est formé dans un matériau de filtrage flexible et est agencé de façon concentrique à l'intérieur dudit espace cylindrique intérieur (35) dudit plus interne (12) des deux autres manchons filtrants (11, 12), formant un espace annulaire entre ce dernier et lui, et définissant un espace intérieur central pour recevoir le liquide à filtrer, une extrémité longitudinale dudit troisième manchon filtrant (111) étant connectée à une deuxième plaque terminale rigide (121) empêchant le liquide de sortir de l'espace intérieur central à l'intérieur du troisième manchon filtrant (111) en traversant celui-ci, et son autre extrémité longitudinale étant connectée à ladite plaque d'entrée rigide (114) qui est munie d'une ouverture centrale (117) pour permettre au liquide à filtrer de s'écouler également à travers celle-ci vers l'espace intérieur central à l'intérieur du troisième manchon filtrant (111).

5. Ensemble filtre selon la revendication 1 ou la revendication 2, **caractérisé en ce que** ladite plaque d'entrée (13) possède une zone (15') empêchant l'écoulement du liquide à filtrer vers ledit espace cylindrique intérieur (35).

6. Ensemble filtre selon l'une quelconque des revendications 1, 2, 4 et 5, **caractérisé en ce que** ladite plaque d'entrée (13 ; 114) possède une surface plane (15) pour recevoir le liquide à filtrer, lesdites ouvertures (16) étant agencées à travers ladite surface plane (15).

7. Ensemble filtre selon l'une quelconque des revendications 1, 2, 5 et 6, **caractérisé en ce que** ladite plaque terminale possède une surface plane fermée (21), une bride extérieure (22) dépendant de ladite surface plane (21) et une bride intérieure (23) s'étendant à partir de ladite surface plane (21) dans une direction opposée à celle de la bride extérieure (22).

8. Ensemble filtre selon l'une quelconque des revendications 1 à 7, **caractérisé en ce que** lesdits manchons filtrants (11, 12 ; 111, 112, 113) sont soudés par ultrasons à ladite plaque d'entrée (12) et/ou aux dites brides intérieure et extérieure (22, 23) et/ou à ladite plaque terminale (21 ; 120, 121).

9. Ensemble filtre selon l'une quelconque des revendications 1 à 8, **caractérisé en ce que** ladite plaque d'entrée (13) possède une bague annulaire (14) ne formant qu'une pièce avec ladite plaque d'entrée (13).

10. Ensemble filtre selon la revendication 9, **caractérisé en ce que** ladite bague (14) comprend une rainure en forme de V (14') dont l'extrémité ouverte se trouve face à une direction perpendiculaire à l'axe longitudinal dudit ensemble filtre (10), et **caractérisé en outre par** un joint torique (42) porté à l'intérieur de ladite rainure (14') pour contacter une surface de paroi latérale (47) dudit panier (10a) lorsque ledit ensemble filtre (10) est supporté à l'intérieur du logement.

11. Ensemble filtre selon la revendication 10, **caractérisé en ce que** ladite rainure en forme de V (14') comprend des fourches supérieure et inférieure (44, 45), les deux fourches (44) étant conçues de telle sorte que, lorsque ledit ensemble filtre (10) est porté à l'intérieur du logement, sous l'action d'une force de compression, le joint torique (42) situé entre elles est compressé et, ainsi, exerce une force contre ladite surface de paroi latérale (47) dudit panier (10a) pour réaliser une étanchéité au liquide.

12. Ensemble filtre selon l'une quelconque des revendications 1 à 11, **caractérisé en ce que** ladite plaque d'entrée (13) possède des brides intérieure (18) et extérieure (19), à chacune desquelles l'un desdits manchons filtrants (11, 12) est connecté, respectivement.

13. Ensemble filtre selon l'une quelconque des revendications 6 et 12, **caractérisé en ce que** ladite bride intérieure (18) descend depuis ladite surface plane (15) et ladite bride extérieure (17) descend depuis ladite bague (14).

14. Ensemble filtre selon la revendication 13, **caractérisé en ce que** ladite surface plane (15) de ladite plaque d'entrée (13) est fermée à la communication avec ledit espace cylindrique intérieur (35).

15. Ensemble filtre selon l'une quelconque des revendications 1 à 14, **caractérisé en ce que** ladite plaque d'entrée (13) est de construction unitaire.

16. Ensemble filtre selon l'une quelconque des revendications 1 à 15, **caractérisé en ce que** ladite plaque d'entrée (13), ladite plaque terminale (20) et lesdits manchons filtrants (11, 12) sont constitués d'un matériau polymère, en particulier de polypropylène.

17. Ensemble filtre selon l'une quelconque des revendications 1 à 16, **caractérisé en ce que** des moyens de support (14, 65) sont proposés pour supporter ledit insert de filtre (10b) à l'intérieur dudit logement.

18. Ensemble filtre selon la revendication 2, ou la revendication 2 en rapport avec l'une quelconque des revendications 5 à 17, **caractérisé en ce qu'**il comprend en outre une cartouche située à l'intérieur du plus interne (61) desdits tamis cylindriques (61, 62) dudit panier (10a).

19. Ensemble filtre selon l'une quelconque des revendications 9 à 18, **caractérisé en ce qu'**un épaulement (65) est formé sur ledit panier (10a) pour supporter ladite bague (14), ledit épaulement (65) étant agencé pour être supporté par ledit logement.

20. Ensemble filtre selon l'une quelconque des revendications 2 à 19, **caractérisé en ce que** lesdits tamis cylindriques (60, 61, 62 ; 160, 161, 162, 163) sont des tamis perforés ou maillés.

21. Utilisation d'un ensemble filtre selon l'une quelconque des revendications 1 à 20 dans un système de filtrage de liquide de type sac.
